# EUROPEAN PATENT SPECIFICATION

(11) **EP 4 246 114 B1**
(45) Date of publication and mention of the grant of the patent: **30.10.2024**
(21) Application number: 22162631.0
(22) Date of filing: 17.03.2022
(51) Int. Cl.: G01M 1/06, F01D 21/00, G01M 1/16, G01M 15/02, H02K 7/00, B23Q 1/00, F16M 7/00

(54) **TEST STAND FOR A TEST ITEM HAVING A ROTATABLE SHAFT**
PRÜFSTAND FÜR EINEN PRÜFLING MIT EINER DREHBAREN WELLE
BANC D'ESSAI POUR UN ARTICLE DE TEST AYANT UN ARBRE ROTATIF

(43) Date of publication of application: 20.09.2023
(73) Proprietor: H. Kleinknecht & Co. GmbH, 57080 Siegen (DE)
(72) Inventor: BEHNISCH, Tobias, 57250 Netphen (DE); GATTERMANN, Markus, 34582 Borken-Freudenthal (DE); BRACHES, Jörg, 34225 Baunatal (DE)
(74) Representative: Liedtke & Partner Patentanwälte

(56) References cited:
- DE-A1- 102016 202 332
- DE-C1- 3 706 389
- US-A- 4 092 855
- US-A1- 2018 136 080

## Description

### Technical Field

The invention relates to a test stand and a method for testing a test item having a rotatable test item shaft.

### Background of the Invention

Test stands for test items having a rotatable test item shaft such as electric motors are known in the art.

Mounting the test item to the test stand and aligning the test item shaft with a shaft of the test stand typically requires considerable tooling time.

State of the art test stands and alignment devices are known from US 4092 855 A, DE 10 2016 202332 A1, DE 37 06 389 C1 and US 2018/136080 A1.

### Summary of the Invention

It is an object of the present invention to provide a novel test stand for testing a test item having a rotatable test item shaft, and a novel method for testing a test item having a rotatable test item shaft.

The object is achieved by a test stand according to claim 1 and by a method according to claim 12.

Preferred embodiments of the invention are given in the dependent claims.

According to the invention, a test stand for testing a test item having a rotatable test item shaft comprises:
- a drive motor and a shaft driven by the drive motor, a rotational axis of the shaft defining an axial direction,
- a fixed plate and a bearing support fixedly held in the fixed plate or being part thereof, wherein the shaft is held by one, two or more bearings in the bearing support, the fixed plate having a surface extending in a first radial direction and in a second radial direction perpendicular to the axial direction,
- a movable plate having a first surface bearing against the surface of the fixed plate, and a second surface opposite the first surface configured for mounting a test item thereon, the movable plate having a central opening allowing the test item shaft to pass through end engage the shaft, the movable plate being movable in a plane spanned by the radial directions relative to the fixed plate,
- one, two, three or more actors configured to move the movable plate in the plane spanned by the radial directions,
- two or more sensors configured to measure a position of the shaft and/or the test item shaft with regard to the radial directions,
a control unit connected to the sensors and the actors and configured to calculate a position of the test item shaft based on the measurements of the sensors, to compare it to a set position and to control the actors to correct the position of the movable plate to reduce a difference between the calculated position and the set position.

In an exemplary embodiment, the drive motor is an electric motor.

In an exemplary embodiment, the drive motor is held in a motor support.

In an exemplary embodiment, the test stand further comprises a motor coupling for coupling an output shaft of the drive motor to the shaft. In other embodiments, the shaft may be the output shaft of the drive motor.

In an exemplary embodiment, the test stand may further comprise a ground plate to which the fixed plate and optionally the motor support holding the drive motor is/are fixed.

In an exemplary embodiment, the test stand further comprises one or more fixing units for releasably fixing the test item to the movable plate.

In an exemplary embodiment, the fixing units respectively comprise at least one of a screw, a hydraulic clamp and a zero point clamping system. A zero point clamping system allows for quickly clamping the device under test or workpiece with high accuracy.

In an exemplary embodiment, each actor comprises at least one of an eccentric engaging a contour in the fixed plate, a cylinder, a wedge and a drive. The drive may be a strain wave gear, e.g. configured to rotate the eccentric.

In an exemplary embodiment, the actor is configured to move the movable plate at least in one direction, wherein at least one spring is arranged to move the movable plate in an opposite direction or to support movement in the opposite direction. In other embodiments, movement in the opposite direction may be achieved or supported by gravity or with one or more additional actors.

In an exemplary embodiment, the tests stand further comprises one or more locking devices configured to releasably fix the movable plate to the fixed plate in position.

In an exemplary embodiment, the locking device comprises at least one of a hydraulic clamp, a pneumatic clamp, an electric clamp and a screw or a combination thereof.

In an exemplary embodiment, each sensor is respectively configured as an eddy current sensor, an optical sensor or a vibration sensor.

In an exemplary embodiment, the test stand further comprises a tubular sheath radially surrounding an end of the shaft and carrying the sensors, wherein the sheath is fixed to the fixed plate or to the bearing support or is a part thereof.

In an exemplary embodiment, the actors comprise a first actor and a second actor arranged in the movable plate on either side of the shaft, and a third actor arranged in the movable plate on one side of the shaft, wherein the first and second actor are configured to move the movable plate vertically, wherein the third actor is configured to move the movable plate horizontally.

In an exemplary embodiment, the actors are arranged in a respective opening in the movable plate and comprise an eccentric engaging a respective contour in the fixed plate.

According to an aspect of the present invention, a method for testing a test item having a rotatable test item shaft using a test stand as described above is provided, the method comprising: mounting the test item to the movable plate and coupling the test item shaft to the shaft, measuring the position of the test item shaft using the sensors, comparing the measured position to a set position and controlling the actors to correct the position of the movable plate to reduce a difference between the calculated position and the set position. If the sensors are vibration sensors, the position may be measured in an indirect way, as misalignments result in vibrations. The position of the movable plate may then be corrected to minimize the vibrations.

In an exemplary embodiment, the shaft is stationary or rotated by the drive during the measurement.

In an exemplary embodiment, the at least one locking device releases the movable plate for correcting the position thereof and locks the movable plate in place afterward.

In an exemplary embodiment, the process is repeated at other at least one different rotational speed of the shaft.

In an exemplary embodiment, the test item is an electric machine.

The solution according to the present invention allows for rapidly aligning a test item such as an electric motor to a shaft of a test stand. This may significantly reduce tooling time.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention, as defined by the appended claims, will become apparent to those skilled in the art from this detailed description.

### Brief Description of the Drawings

The present invention will become more fully understood from the detailed description given hereinbelow and the accompanying drawings which are given by way of illustration only, and thus, are not limitative of the present invention, and wherein:
- Figure 1: is a schematic view of a test stand and a test item, in particular an electric motor,
- Figure 2: is a schematic view of the test stand,
- Figure 3: is another schematic view of the test stand, and
- Figure 4: is yet another schematic view of the test stand and the test item,

Corresponding parts are marked with the same reference symbols in all figures.

### Detailed Description of Preferred Embodiments

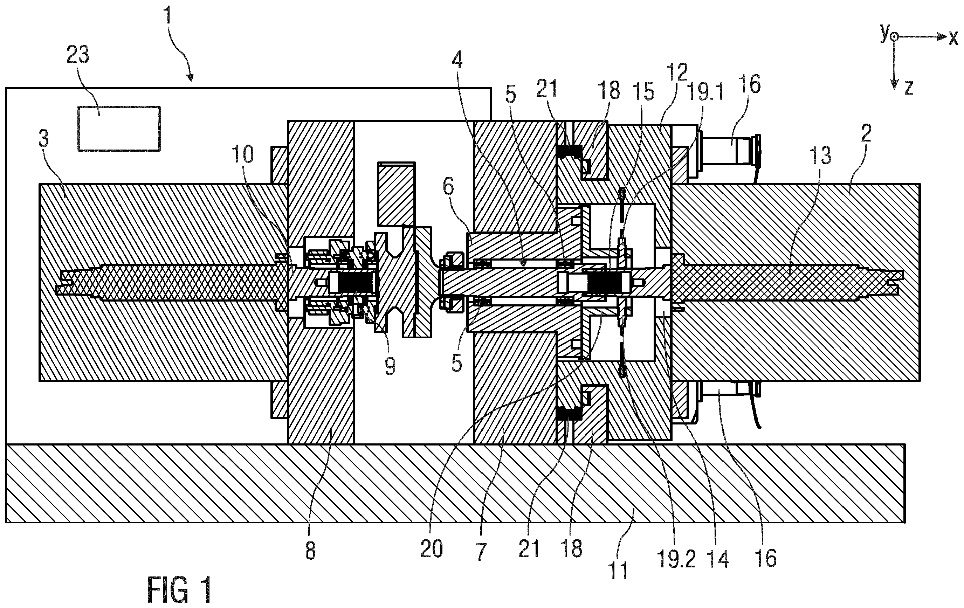

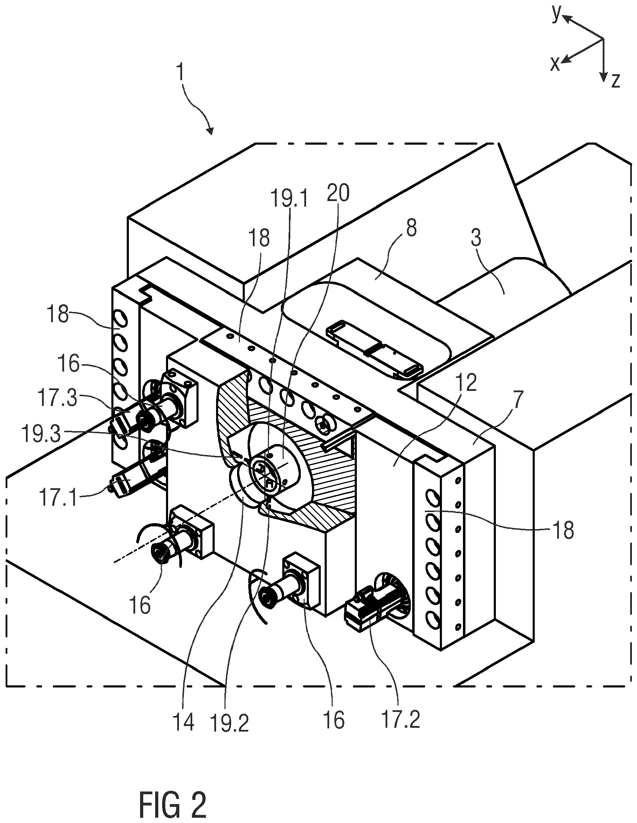

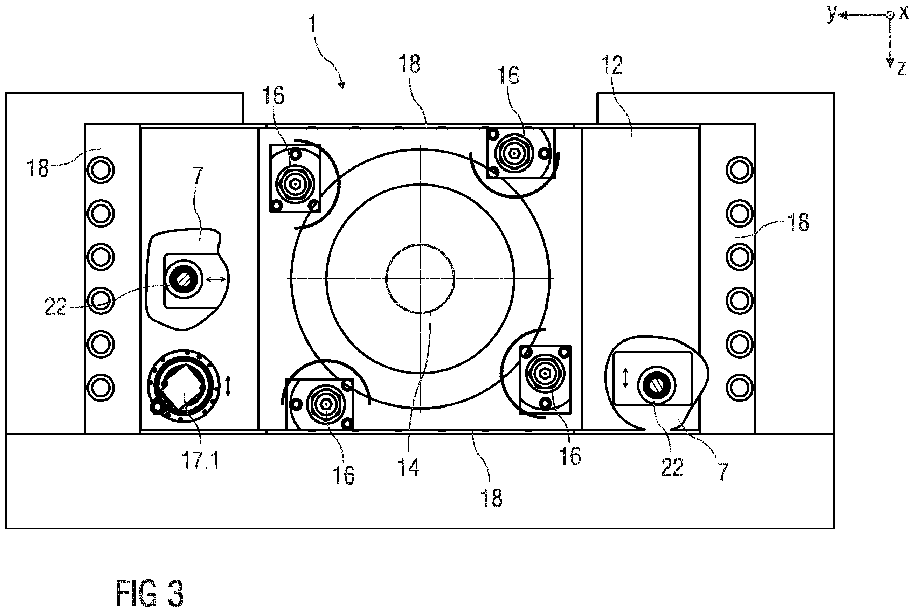

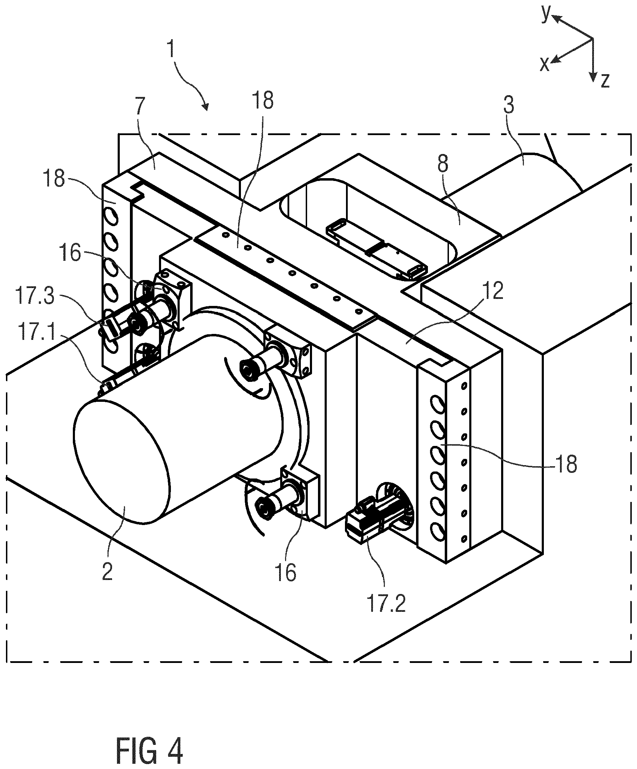

**Figure 1** is a schematic view of an arrangement, comprising a test stand 1 and a test item 2. **Figures 2** **and** **3** are schematic views of the test stand 1 without the test item 2. **Figure 4** is another schematic view of the test stand 1 and the test item 2.

The test stand 1 comprises a drive motor 3, e.g. an electric motor, and a shaft 4 driven by the drive motor 3, a rotational axis of the shaft 4 extending in an axial direction x. The shaft 4 is held by one, two or more bearings 5 in a bearing support 6. The bearings 5 may be specified for rotational speeds of 25000 rpm to 40000 rpm, e.g. 30000 rpm. The bearing support 6 is fixedly held in a fixed plate 7 or may be part of the fixed plate 7. The drive motor 3 may be held in a motor support 8. A motor coupling 9 may be provided to couple an output shaft 10 of the drive motor 3 to the shaft 4. In other embodiments, the shaft 4 may be the output shaft 10 of the drive motor 3.

The fixed plate 7 defines a surface extending in a first radial direction y and a second radial direction z, i.e. extending perpendicular to the axial direction x. The fixed plate 7 and the motor support 8 may be fixed on a ground plate 11.

Moreover, the test stand 1 comprises a movable plate 12 defining a first surface bearing against the surface of the fixed plate 7, and a second surface opposite the first surface configured for mounting the test item 2 thereon.

The test item 2 may be a device comprising a rotatable test item shaft 13 such as an electric machine. The movable plate 12 has a central opening 14 allowing the test item shaft 13 to pass through end engage the shaft 4, e.g. using a test coupling 15, also referred to as a drive tool 15 or adapter tool 15. A drive tool 15 is a tool configured to connect the test item 2 to the test stand 1. The central opening 14 may have an extended diameter toward the fixed plate 7 to accommodate the bearing support 6 which may protrude out of the fixed plate 7.

The test item 2 may be fixed to the movable plate 12 using one or more fixing units 16, e.g. screws, hydraulic clamps, a zero point clamping system or the like.

The movable plate 12 may be moved in the radial directions y, z relative to the fixed plate 7 to some extent in order to coaxially align the test item shaft 13 with the shaft 4. In order to move the movable plate 12, there may be one, two, three or more actors 17.1 to 17.3 provided. In an exemplary embodiment, each actor 17.1 to 17.3 may comprise at least one of an eccentric, a cylinder, a wedge and the like. The actors 17.1 to 17.3 may further comprise a respective drive, e.g. a harmonic drive or a servomotor, to rotate the eccentric. While an adjustment in one direction may be achieved using the drive, an adjustment in an opposite direction may be achieved or supported by a spring 21 or using gravity or by one or more additional actors.

Moreover, one or more locking devices 18 may be provided to releasably fix the movable plate 12 to the fixed plate 7 in position, so that movement of the movable plate 12 relative to the fixed plate 7 is inhibited. The locking devices 18 may respectively comprise at least one of a hydraulic clamp, a pneumatic clamp, an electric clamp or a screw.

Two or more sensors 19.1 to 19.3, e.g. eddy current sensors or optical sensors, are arranged to measure the position of the shaft 4 and/or the test item shaft 13 with regard to the radial directions y, z once the test item 2 is mounted on the movable plate 12 and the locking device 18 has locked the movable plate 12 to the fixed plate 7. The sensors 19.1 to 19.3 are configured to scan the shaft 4 or the test item shaft 13 or the test coupling 15, drive tool 15 or adapter tool 15 radially. If the shaft 4 or test item shaft 13 is a splined shaft, it may be useful to adapt the adapter tool 15 and measure its position instead of the position of the shaft 4. The adapter tool 15 may be part of the shaft 4. The adapter tool 15 is flexible to a certain extent and can adapt to misalignments of the test item 2. Measuring the position of the adapter tool 15 thus yields a centre variation of the test item 2.

A control unit 23 may be connected to the sensors 19.1 to 19.3 to acquire their measurements and to the actors 17.1 to 17.3, and optionally to the drive motor 3 and the locking devices 18 to control them.

A current position of the test item shaft 13 may be calculated in the control unit 23 from these measurements. Depending on the application, the measurement may be performed with the shaft 4 being stationary or rotating. The position of the test item shaft 13 determined is compared to a set position and the position of the movable plate 12 is corrected using the actors 17.1 to 17.3 to coaxially align the test item shaft 13 with the shaft 4. The locking device 18 may have to be released to allow for correcting the position. Afterwards, the locking device 18 may lock the movable plate 12 in place to the fixed plate 7 again.

In another exemplary embodiment, the test item 2 is mounted to the movable plate 12 and the connection of the test item shaft 13 to the shaft 4 is made. The shaft 4 is then rotated using the drive motor 3, thereby also rotating the test item shaft 13. The sensors 19.1 to 19.3 may be configured as vibration sensors to detect a misalignment, similar to a wheel balancer machine. The position of the movable plate 12 is varied using the actors 17.1 to 17.3 until the result meets the requirements to coaxially align the test item shaft 13 with the shaft 4. If necessary, the process may be repeated at other rotational speeds. The adjustment of the movable plate 12 may be carried out in an iterative way or it may be carried out continuously during the measurement at reduced rotational speed with the movable plate 12 only slightly clamped by the locking devices 18. If the sensors 19.1 to 19.3 are vibration sensors, the position is measured in an indirect way, as misalignments result in vibrations. The position of the movable plate 12 is then corrected to minimize the vibrations.

An end of the shaft 4 facing the test item 2 may be located within a tubular sheath 20 which may serve for fixing the sensors 19.1 to 19.3. The sheath 20 may be fixed to the fixed plate 7 or bearing support 6. For example, a first sensor 19.1 may be arranged above the shaft 4, a second sensor 19.2 may be arranged below the shaft 4 and a third sensor 19.3 may be arranged horizontally from the shaft 4, when the arrangement is in an operating position as shown in figures 1 to 4. The first sensor 19.1 and the second sensor 19.2 may be used to measure a position of the shaft 4 in the second radial direction z and the third sensor 19.3 may be used to measure a position of the shaft 4 in the first radial direction y.

The actors 17.1 to 17.3 may comprise a first actor 17.1 and a second actor 17.2 arranged in the movable plate 12 on either side of the shaft 4 at a lower end of the movable plate 12, and a third actor 17.3 arranged above one of the first and second actor 17.1, 17.2. While the first and second actor 17.1, 17.2 may be configured to move the movable plate 12 in the second radial direction z, i.e. vertically, the third actor 17.3 may be configured to move the movable plate 12 in the first radial direction y, i.e. horizontally.

The actors 17.1 to 17.3 may be arranged in a respective opening in the movable plate 12 and comprise an eccentric (not shown) engaging a respective contour 22 in the fixed plate 7.

### List of References

- 1: test stand
- 2: test item
- 3: drive motor
- 4: shaft
- 5: bearing
- 6: bearing support
- 7: fixed plate
- 8: motor support
- 9: motor coupling
- 10: output shaft
- 11: ground plate
- 12: movable plate
- 13: test item shaft
- 14: central opening
- 15: test coupling, drive tool, adapter tool
- 16: fixing unit
- 17.1, 17.2, 17.3: actor
- 18: locking device
- 19.1, 19.2, 19.3: sensor
- 20: sheath
- 21: spring
- 22: contour
- 23: control unit
- x: axial direction
- y: first radial direction
- z: second radial direction

## Claims

1. A test stand (1) for testing a test item (2) having a rotatable test item shaft (13), the test stand (1) comprising:
- a drive motor (3) and a shaft (4) driven by the drive motor (3), a rotational axis of the shaft (4) defining an axial direction (x),
- a fixed plate (7) and a bearing support (6) fixedly held in the fixed plate (7) or being part thereof, wherein the shaft (4) is held by one, two or more bearings (5) in the bearing support (6), the fixed plate (7) having a surface extending in a first radial direction (y) and in a second radial direction (z) perpendicular to the axial direction (x), **characterized in that** the test stand (1) further comprises
- a movable plate (12) having a first surface bearing against the surface of the fixed plate (7), and a second surface opposite the first surface configured for mounting the test item (2) thereon, the movable plate (12) having a central opening (14) allowing the test item shaft (13) to pass through end engage the shaft (4), the movable plate (12) being movable in a plane spanned by the radial directions (y, z) relative to the fixed plate (7),
- one, two, three or more actors (17.1 to 17.3) configured to move the movable plate (12) in the plane spanned by the radial directions (y, z),
- two or more sensors (19.1 to 19.3) configured to measure a position of the shaft (4) and/or the test item shaft (13) with regard to the radial directions (y, z),
a control unit (23) connected to the sensors (19.1 to 19.3) and the actors (17.1 to 17.3) and configured to calculate a position of the test item shaft (13) based on the measurements of the sensors (19.1 to 19.3), to compare it to a set position and to control the actors (17.1 to 17.3) to correct the position of the movable plate (12) to reduce a difference between the calculated position and the set position.

2. The test stand (1) according to claim 1, further comprising one or more fixing units (16) for releasably fixing the test item (2) to the movable plate (12).

3. The test stand (1) according to claim 2, wherein the fixing units (16) respectively comprise at least one of a screw, a hydraulic clamp and a zero point clamping system or a combination thereof.

4. The test stand (1) according to any one of the preceding claims, wherein each actor (17.1 to 17.3) comprises at least one of an eccentric engaging a contour (22) in the fixed plate (7), a cylinder, a wedge and a drive.

5. The test stand (1) according to claim 4, wherein the drive is a strain wave gear configured to rotate the eccentric.

6. The tests stand (1) according to any one of the preceding claims, wherein the actor (17.1 to 17.3) is configured to move the movable plate (12) at least in one direction, wherein at least one spring (21) is arranged to move the movable plate (12) in an opposite direction or to support movement in the opposite direction.

7. The tests stand (1) according to any one of the preceding claims, further comprising one or more locking devices (18) configured to releasably fix the movable plate (12) to the fixed plate (7) in position.

8. The test stand (1) according to claim 7, wherein the locking device (18) comprises at least one of a hydraulic clamp, a pneumatic clamp, an electric clamp and a screw.

9. The test stand (1) according to any one of the preceding claims, wherein the sensors (19.1 to 19.3) are respectively configured as an eddy current sensor, an optical sensor or a vibration sensor.

10. The test stand (1) according to any one of the preceding claims, wherein the actors (17.1 to 17.3) comprise a first actor (17.1) and a second actor (17.2) arranged in the movable plate (12) on either side of the shaft (4), and a third actor (17.3) arranged in the movable plate (12) on one side of the shaft (4), wherein the first and second actor (17.1, 17.2) are configured to move the movable plate (12) vertically, wherein the third actor (17.3) is configured to move the movable plate (12) horizontally.

11. The test stand (1) according to any one of claims 4 to 10, wherein the actors (17.1 to 17.3) are arranged in a respective opening in the movable plate (12) and comprise an eccentric engaging a respective contour (22) in the fixed plate (7).

12. A method for testing a test item (2) having a rotatable test item shaft (13) using a test stand (1) according to any one of the preceding claims, the method comprising: mounting the test item (2) to the movable plate (12) and coupling the test item shaft (13) to the shaft (4), measuring the position of the test item shaft (13) using the sensors (19.1 to 19.3), comparing the measured position to a set position and controlling the actors (17.1 to 17.3) to correct the position of the movable plate (12) to reduce a difference between the calculated position and the set position.

13. The method according to claim 12, wherein the shaft (4) is stationary or rotated by the drive during the measurement.

14. The method according to claim 12 or 13, wherein the at least one locking device (18) releases the movable plate (12) for correcting the position thereof and locks the movable plate (12) in place afterward.

15. The method according to claim 13 or 14, wherein the process is repeated at other at least one different rotational speed of the shaft (4).

## Patentansprüche

1. Prüfstand (1) zum Prüfen eines Prüflings (2) mit einer drehbaren Prüflingswelle (13), wobei der Prüfstand (1) umfasst:
- einen Antriebsmotor (3) und eine durch den Antriebsmotor (3) angetriebene Welle (4), wobei eine Rotationsachse der Welle (4) eine axiale Richtung (x) definiert,
- eine feststehende Platte (7) und einen Lagerträger (6), der fest in der feststehenden Platte (7) gehalten ist oder Teil davon ist, wobei die Welle (4) durch ein, zwei oder mehr Lager (5) im Lagerträger (6) gehalten ist, wobei die feststehende Platte (7) eine Oberfläche aufweist, die sich in einer ersten radialen Richtung (y) und in einer zweiten radialen Richtung (z) rechtwinklig zur axialen Richtung (x) erstreckt, **dadurch gekennzeichnet, dass** der Prüfstand (1) ferner umfasst:
- eine bewegbare Platte (12) mit einer ersten Oberfläche, die an der Oberfläche der feststehenden Platte (7) anliegt, und einer zweiten Oberfläche gegenüber der ersten Oberfläche, die zur Montage des Prüflings (2) darauf ausgelegt ist, wobei die bewegbare Platte (12) eine mittige Öffnung (14) aufweist, die es der Prüflingswelle (13) ermöglicht, hindurch zu verlaufen und mit der Welle (4) in Eingriff zu kommen, wobei die bewegbare Platte (12) in einer durch die radialen Richtungen (y, z) aufgespannten Ebene relativ zur feststehenden Platte (7) bewegbar ist,
- einen, zwei, drei oder mehr Aktoren (17.1 bis 17.3), die dazu ausgelegt sind, die bewegbare Platte (12) in der durch die radialen Richtungen (y, z) aufgespannten Ebene zu bewegen,
- zwei oder mehr Sensoren (19.1 bis 19.3), die dazu ausgelegt sind, eine Position der Welle (4) und/oder der Prüflingswelle (13) in Bezug auf die radialen Richtungen (y, z) zu messen,
eine Steuereinheit (23), die mit den Sensoren (19.1 bis 19.3) und den Aktoren (17.1 bis 17.3) verbunden und dazu ausgelegt ist, eine Position der Prüflingswelle (13) basierend auf den Messungen der Sensoren (19.1 bis 19.3) zu berechnen, diese mit einer Sollposition zu vergleichen und die Aktoren (17.1 bis 17.3) zu steuern, um die Position der bewegbaren Platte (12) zu korrigieren, um eine Differenz zwischen der berechneten Position und der Sollposition zu reduzieren.

2. Prüfstand (1) nach Anspruch 1, ferner umfassend eine oder mehrere Befestigungseinheiten (16) zum lösbaren Befestigen des Prüflings (2) an der bewegbaren Platte (12) .

3. Prüfstand (1) nach Anspruch 2, wobei die Befestigungseinheiten (16) jeweils mindestens eines von einer Schraube, einer hydraulischen Klemmvorrichtung und einem Nullpunktspannsystem oder eine Kombination davon umfassen.

4. Prüfstand (1) nach einem der vorhergehenden Ansprüche, wobei jeder Aktor (17.1 bis 17.3) mindestens eines von einem Exzenter, der in eine Kontur (22) in der feststehenden Platte (7) eingreift, einem Zylinder, einem Keil und einem Antrieb umfasst.

5. Prüfstand (1) nach Anspruch 4, wobei der Antrieb ein Spannungswellengetriebe ist, das dazu ausgelegt ist, den Exzenter zu drehen.

6. Prüfstand (1) nach einem der vorhergehenden Ansprüche, wobei der Aktor (17.1 bis 17.3) dazu ausgelegt ist, die bewegbare Platte (12) mindestens in eine Richtung zu bewegen, wobei mindestens eine Feder (21) angeordnet ist, um die bewegbare Platte (12) in eine entgegengesetzte Richtung zu bewegen oder die Bewegung in die entgegengesetzte Richtung zu unterstützen.

7. Prüfstand (1) nach einem der vorhergehenden Ansprüche, ferner umfassend eine oder mehrere Verriegelungsvorrichtungen (18), die dazu ausgelegt sind, die bewegbare Platte (12) lösbar in Position an der feststehenden Platte (7) zu befestigen.

8. Prüfstand (1) nach Anspruch 7, wobei die Verriegelungsvorrichtung (18) mindestens eines von einer hydraulischen Klemmvorrichtung, einer pneumatischen Klemmvorrichtung, einer elektrischen Klemmvorrichtung und einer Schraube umfasst.

9. Prüfstand (1) nach einem der vorhergehenden Ansprüche, wobei die Sensoren (19.1 bis 19.3) jeweils als Wirbelstromsensor, optischer Sensor oder Vibrationssensor ausgelegt sind.

10. Prüfstand (1) nach einem der vorhergehenden Ansprüche, wobei die Aktoren (17.1 bis 17.3) einen ersten Aktor (17.1) und einen zweiten Aktor (17.2), die in der bewegbaren Platte (12) beidseitig der Welle (4) angeordnet sind, und einen dritten Aktor (17.3) umfassen, der in der bewegbaren Platte (12) auf einer Seite der Welle (4) angeordnet ist, wobei der erste und zweite Aktor (17.1, 17.2) dazu ausgelegt sind, die bewegbare Platte (12) vertikal zu bewegen, wobei der dritte Aktor (17.3) dazu ausgelegt ist, die bewegbare Platte (12) horizontal zu bewegen.

11. Prüfstand (1) nach einem der Ansprüche 4 bis 10, wobei die Aktoren (17.1 bis 17.3) in einer jeweiligen Öffnung in der bewegbaren Platte (12) angeordnet sind und einen Exzenter umfassen, der in eine jeweilige Kontur (22) in der feststehenden Platte (7) eingreift.

12. Verfahren zum Prüfen eines Prüflings (2) mit einer drehbaren Prüflingswelle (13) unter Verwendung eines Prüfstands (1) nach einem der vorhergehenden Ansprüche, wobei das Verfahren umfasst: Montieren des Prüflings (2) an der bewegbaren Platte (12) und Koppeln der Prüflingswelle (13) mit der Welle (4), Messen der Position der Prüflingswelle (13) unter Verwendung der Sensoren (19.1 bis 19.3), Vergleichen der gemessenen Position mit einer Sollposition und Steuern der Aktoren (17.1 bis 17.3), um die Position der bewegbaren Platte (12) zu korrigieren, um eine Differenz zwischen der berechneten Position und der Sollposition zu reduzieren.

13. Verfahren nach Anspruch 12, wobei die Welle (4) während der Messung stillsteht oder durch den Antrieb gedreht wird.

14. Verfahren nach Anspruch 12 oder 13, wobei die mindestens eine Verriegelungsvorrichtung (18) die bewegbare Platte (12) zur Korrektur ihrer Position freigibt und die bewegbare Platte (12) anschließend in Position verriegelt.

15. Verfahren nach Anspruch 13 oder 14, wobei der Prozess mit mindestens einer anderen Drehzahl der Welle (4) wiederholt wird.

## Revendications

1. Banc d'essai (1) pour tester un article de test (2) comportant un arbre d'article de test rotatif (13), le banc d'essai (1) comprenant :
- un moteur d'entraînement (3) et un arbre (4) entraîné par le moteur d'entraînement (3), un axe de rotation de l'arbre (4) définissant une direction axiale (x) ,
- une plaque fixe (7) et un support de roulement (6) maintenu de manière fixe dans la plaque fixe (7) ou faisant partie de celle-ci, l'arbre (4) étant maintenu par un, deux ou plusieurs roulements (5) dans le support de roulement (6), la plaque fixe (7) présentant une surface s'étendant dans une première direction radiale (y) et dans une seconde direction radiale (z) perpendiculaire à la direction axiale (x), **caractérisé en ce que** le banc d'essai (1) comprend en outre
- une plaque mobile (12) présentant une première surface reposant contre la surface de la plaque fixe (7), et une seconde surface opposée à la première surface conçue pour le montage de l'article de test (2) sur celle-ci, la plaque mobile (12) comportant une ouverture centrale (14) permettant à l'arbre d'article de test (13) de passer à travers l'ouverture centrale (14) et de venir en prise avec l'arbre (4), la plaque mobile (12) étant mobile dans un plan couvert par les directions radiales (y, z) par rapport à la plaque fixe (7),
- un, deux, trois ou plusieurs acteurs (17.1 à 17.3) conçus pour déplacer la plaque mobile (12) dans le plan couvert par les directions radiales (y, z),
- deux ou plusieurs capteurs (19.1 à 19.3) conçus pour mesurer une position de l'arbre (4) et/ou de l'arbre d'article de test (13) par rapport aux directions radiales (y, z),
une unité de commande (23) connectée aux capteurs (19.1 à 19.3) et aux acteurs (17.1 à 17.3) et conçue pour calculer une position de l'arbre d'article de test (13) sur la base des mesures des capteurs (19.1 à 19.3), pour la comparer à une position de consigne et pour commander les acteurs (17.1 à 17.3) afin de corriger la position de la plaque mobile (12) pour réduire la différence entre la position calculée et la position de consigne.

2. Banc d'essai (1) selon la revendication 1, comprenant en outre une ou plusieurs unités de fixation (16) pour fixer de manière amovible l'article de test (2) à la plaque mobile (12).

3. Banc d'essai (1) selon la revendication 2, les unités de fixation (16) comprenant respectivement au moins une vis, une pince hydraulique et un système de serrage à point zéro ou une combinaison de ceux-ci.

4. Banc d'essai (1) selon l'une quelconque des revendications précédentes, chaque acteur (17.1 à 17.3) comprenant au moins l'un parmi un excentrique venant en prise avec un contour (22) de la plaque fixe (7), un vérin, une cale et un entraînement.

5. Banc d'essai (1) selon la revendication 4, l'entraînement étant un engrenage à ondes de contrainte conçu pour faire tourner l'excentrique.

6. Banc d'essai (1) selon l'une quelconque des revendications précédentes, l'acteur (17.1 à 17.3) étant conçu pour déplacer la plaque mobile (12) au moins dans une direction, au moins un ressort (21) étant conçu pour déplacer la plaque mobile (12) dans une direction opposée ou pour soutenir le mouvement dans la direction opposée.

7. Banc d'essai (1) selon l'une quelconque des revendications précédentes, comprenant en outre un ou plusieurs dispositifs de verrouillage (18) conçus pour fixer de manière amovible la plaque mobile (12) à la plaque fixe (7) en position.

8. Banc d'essai (1) selon la revendication 7, le dispositif de verrouillage (18) comprenant au moins l'un parmi une pince hydraulique, une pince pneumatique, une pince électrique et une vis.

9. Banc d'essai (1) selon l'une quelconque des revendications précédentes, les capteurs (19.1 à 19.3) étant respectivement conçus comme un capteur à courants de Foucault, un capteur optique ou un capteur de vibrations.

10. Banc d'essai (1) selon l'une quelconque des revendications précédentes, les acteurs (17.1 à 17.3) comprenant un premier acteur (17.1) et un deuxième acteur (17.2) disposés dans la plaque mobile (12) de part et d'autre de l'arbre (4), et un troisième acteur (17.3) disposé dans la plaque mobile (12) d'un côté de l'arbre (4), le premier et le deuxième acteur (17.1, 17.2) étant conçus pour déplacer la plaque mobile (12) verticalement, le troisième acteur (17.3) étant conçu pour déplacer la plaque mobile (12) horizontalement.

11. Banc d'essai (1) selon l'une quelconque des revendications 4 à 10, les acteurs (17.1 à 17.3) étant disposés dans une ouverture respective de la plaque mobile (12) et comprenant un excentrique venant en prise avec un contour (22) respectif dans la plaque fixe (7).

12. Procédé d'essai pour soumettre à un test un article de test (2) comportant un arbre d'article de test rotatif (13) à l'aide d'un banc d'essai (1) selon l'une quelconque des revendications précédentes, le procédé comprenant les étapes consistant à : monter l'article de test (2) sur la plaque mobile (12) et accoupler l'arbre d'article de test (13) à l'arbre (4), mesurer la position de l'arbre d'article de test (13) à l'aide des capteurs (19.1 à 19.3), comparer la position mesurée à une position de consigne et commander les acteurs (17.1 à 17.3) pour corriger la position de la plaque mobile (12) afin de réduire la différence entre la position calculée et la position de consigne.

13. Procédé selon la revendication 12, l'arbre (4) étant immobile ou mis en rotation par l'entraînement pendant la mesure.

14. Procédé selon la revendication 12 ou 13, l'au moins un dispositif de verrouillage (18) libérant la plaque mobile (12) pour corriger sa position et verrouillant ensuite la plaque mobile (12) en place.

15. Procédé selon la revendication 13 ou 14, le processus étant répété à au moins une autre vitesse de rotation de l'arbre (4).
